Europäisches Patentamt

European Patent Office

Office européen des brevets

(19)

(11) Veröffentlichungsnummer : **0 402 746 B1**

(12) **EUROPÄISCHE PATENTSCHRIFT**

(45) Veröffentlichungstag der Patentschrift :
**14.04.93 Patentblatt 93/15**

(51) Int. Cl.⁵ : **B09B 3/00, C04B 18/04**

(21) Anmeldenummer : **90110657.5**

(22) Anmeldetag : **06.06.90**

(54) **Verfahren zur Wiederverwertung von staub- oder schlammförmig anfallendem Sonderabfall.**

(30) Priorität : **10.06.89 DE 3919011**

(43) Veröffentlichungstag der Anmeldung :
**19.12.90 Patentblatt 90/51**

(45) Bekanntmachung des Hinweises auf die
Patenterteilung :
**14.04.93 Patentblatt 93/15**

(84) Benannte Vertragsstaaten :
**AT BE CH DE FR LI LU NL**

(56) Entgegenhaltungen :
**EP-A- 0 294 362**
**EP-A- 0 314 971**
**WO-A-87/06163**
**WO-A-88/02284**

(73) Patentinhaber : **ZWN ZIEGELWERK
NEUNKIRCHEN GmbH
Spieser Strasse 22
W-6680 Neunkirchen (DE)**

(72) Erfinder : **Bartschmid, Hermann
Schlesierweg 13
W-6680 Neunkirchen (DE)**
Erfinder : **Meiser, Rüdiger
Zum Klopp 5
W-6685 Schiffweiler-Stennweiler (DE)**
Erfinder : **Marx, Heiner, Dr.
Galgenbergstrasse 3
W-6683 Spiesen-Elversberg (DE)**
Erfinder : **Marx, Hubert
Im Birkenstück
W-6683 Spiesen-Elversberg (DE)**
Erfinder : **Glatigny, Manfred Karl
Seitertstrasse 11
W-6634 Wallerfangen (DE)**

(74) Vertreter : **Bernhardt, Winfrid, Dr.-Ing.
Kobenhüttenweg 43
W-6600 Saarbrücken (DE)**

**Beschreibung**

Die Erfindung betrifft ein Verfahren zur Wiederverwertung von staub- oder schlammförmig anfallendem, insbesondere schwermetallhaltigem, Sonderabfall durch Einbinden in ein möglichst sulfat- und sulfitarmes tonkeramisches Erzeugnis.

Ein solches Verfahren ist aus der DE-OS 36 30 697 und der DE-OS 37 13 482 bekannt.

Nach der ersten Schrift sollen schwermetallhaltige Schlämme, insbesondere Galvanikschlämme, mit Ton und gegebenenfalls Magerungsmitteln und Flußmitteln vermengt werden und anschließend bei Temperaturen zwischen 750 °C und 1150 °C zu Klinkern handelsüblicher Qualität gebrannt werden. In diesen sind die Schwermetalle in die Glasphase eingebunden.

Die zweite Schrift zielt auf das gleiche ab mit dem schwermetallhaltigen Filterstaub von Müllverbrennungsanlagen. Außer Ziegeln sollen unter Verwendung von Ziegelton auch Rohre, Zuschlagstoffe für Baumaterial, Füll- und/oder Isoliermaterial o.dgl. herstellbar sein.

Nach der DE-OS 32 26 702 sollen körnige Berge aus dem Kohlebergbau zusammen mit Hausmüll, ferner den bei der Rauchgasentschwefelung entstehenden Erdalkaliverbindungen sowie ggf. darüber hinaus Filterasche aus der Entstaubung von Kohlekraftwerken oder Müllverbrennungsanlagen keramisiert werden. Dabei soll z.B. Calziumsulfat-beta-Halbhydrat entstehen. Je nach Entschwefelungsverfahren müßte sich teilweise oder ganz stattdessen Calzium- und/oder Magnesiumsulfit ergeben.

Die DE-OS 36 05 544 schlägt ein Verfahren und eine Vorrichtung zur Hitzebehandlung von Waschbergen vor. Verwendungszweck der gebrannten Waschberge ist Zuschlag im Hoch-, Tief- und Straßenbau.

Der Erfindung liegt die Aufgabe zugrunde, ein weiteres Verfahren zur Beseitigung weiterer Mengen von Sonderabfall zu schaffen.

Gemäß der Erfindung ist ein Verfahren der eingangs genannten Art vorgesehen, bei dem als tonmineralhaltiger Rohstoff Abraum-Ton oder Bergematerial aus dem Kohlebergbau, der bzw. das zu mindestens 80 % auf eine Korngröße unter 0,5 mm gemahlen worden ist, verwendet wird in einem Feststoff-Anteil im Masseversatz von 20 bis 90 Gew. %, gerechnet unter Abzug des ggf. vorhandenen Kohlegehaltes, und damit ein Zuschlag zu einem Versatzbaustoff für den Bergbau in einer Korngröße von mindestens 95 % unter 32 mm hergestellt wird.

Es wurde gefunden, daß sich der feinkörnige Sonderabfall aus Stäuben oder Schlämmen mit feingemahlenem Bergematerial auch bei einem Kohlegehalt des Bergematerials von 10 bis 15 % oder mehr in ein keramisches Erzeugnis umwandeln läßt, das mindestens die Anforderungen für die Deponieklasse 2 nach dem Richtlinienentwurf 1987 des Landesamtes für Wasser und Abfall des Landes Nordrhein-Westfalen erfüllt und genügend Festigkeit jedenfalls für einen Zuschlag zu einem Versatzbaustoff für den Bergbau aufweist.

Das Bergematerial wird dabei, wohlgemerkt, nicht wie bisher stückig, wie es anfällt, und ggf. unter Hinzufügung von Hausmüll, Erdalkalisulfat und/oder -sulfit enthaltenden Rauchgasentschwefelungsprodukten und Filterasche gebrannt, sondern als Ausgangsmaterial einer an sich herkömmlichen, sorgfältigen keramischen Masseaufbereitung verwendet zur Bildung eines reproduzierbaren keramischen Scherbens, der dementsprechend auch nur möglichst wenig mit Sulfat oder Sulfit durchsetzt ist. Abraum-Tone, die mit Ausnahme des Kohlegehaltes ähnliche Zusammensetzungen wie Bergematerial haben können, können je nach den sonstigen Umständen mitverwendet oder stattdessen verwendet werden.

Vorzugsweise wird man als das Bergematerial mindestens teilweise Waschberge oder den schon sehr feinkörnigen Flotationsschlamm verwenden. Trockenberge lassen sich jedoch auch verarbeiten.

Soweit es sich mit dem übrigen Masseversatz verträgt und der Kohleanteil zur Ausnutzung seiner Energie erhöht werden soll, kann man als Bergematerial auch einen Anteil Berge-Kohle-Schlamm aus Absetzweihern hinzufügen.

Besonders bei Verwendung einer wenig oder keine Kohle enthaltenden Abraum-Tonmischung kann auch durch Hinzufügen von gemahlender Feinkohle oder Ballastkohle der Kohlegehalt etwa auf die angegebenen Prozentbereiche eingestellt werden.

Bei ausreichend vorhandener $Al_2O_3$-Komponente aus den Tonmineralien oder auch aus dem einzubindenden Sonderabfall kann man die $SiO_2$-Komponente erhöhen gleichfalls durch Verwendung von Abfallmaterial, wie Kieselgur-Filtermassen oder Ölsanden.

Nach der Erfindung einbinden lassen sich insbesondere Schlämme aus Fällungs- oder Neutralisierungsprozessen der Galvanik, der Oberflächenveredelung oder der Wasseraufbereitung oder aus Beizereien, Abwasserschlämme von Emaillierungs- oder Keramikbetrieben,
Filterstäube von Müllverbrennungsanlagen,
Kupolofen-Filterstäube,
Filterstäube und Aschreststoffe aus Kohlekraftwerken,
Stäube aus Trocken- oder Naßentstaubung von Stahlwerken.

Als besonders zweckmäßige Formgebung wird vorgeschlagen, durch Strangpressen runde Stangen von 2 bis 15 mm Durchmesser zu formen und diese zu zerkleinern oder einfach bei der Weiterverarbeitung in Stücke zerbrechen zu lassen.

Für diese Verfahrensweise ist ein Brennen im Drehrohrofen zweckmäßig.

Andererseits kann man beispielsweise auch vorhandene Anlagen der Ziegelindustrie mitbenutzen und Ziegelformlinge herstellen und im Tunnelofen brennen und anschließend zerkleinern.

Die Ziegelformlinge können auch vor dem Brennen so weit zerkleinert werden, daß sich zusammen mit der Brennschwindung die gewünschte Korngröße ergibt, und nach der Zerkleinerung auf Trägerplatten, Schalen u.a. im Tunnelofen gebrannt werden.

Ferner läßt sich die Formgebung auch durch eine Pelletierung der getrockneten Ausgangsmischung vornehmen; nach dem Brennprozeß lassen sich die Pellets entsprechend zerkleinern oder klassieren.

Zerkleinert wird vorzugsweise entsprechend der Sieblinie $AB_{32}$ der DIN 1045, Ausgabe 1978, Abschn. 2.2.6.

Mit der Verwendung des Erzeugnisses als Zuschlag zu einem Versatzbaustoff können über die Unterbringung des Erzeugnisses hinaus auch Vorteile in dem Versatzbaustoff erzielt werden, beispielsweise hinsichtlich der Konsistenz vor der Verfestigung.

Beispiel:

Keramische Einbindung eines Kupolofen-Filterstaubes

Der zu beseitigende Abfallstoff fällt bei der Trockenentstaubung der Abgase von Gießerei-Schmelzöfen (Kupolöfen) an. Die Vollanalyse zeigt folgende Zusammensetzung (Gew.-%):
CaO 54.0, MgO 0.77, $Na_2O$ 0.05, $K_2O$ 0.03, $SiO_2$ 9.94, $Al_2O_3$ 5.73, $Fe_2O_3$ 1.06, $MnO_2$ 0.05, $Cr_2O_3$ 0.03, ZnO 1.33, Cl + $SO_3$ 2.0, Glühverlust 24.1

Der Gehalt an Schwermetallen nach Königswasseraufschluß beträgt (mg/kg TS):
As 46.1, Cd 58.3, Cr 200, Cu 606, Hg 13.6, Ni 44.3, Pb 3000, Zn 10700

In einem Eluat des Kupolofen-Filterstaubes mit deionisiertem Wasser nach DEV-S4 (Deutsche Einheitsverfahren zur Wasser-, Abwasser- und Schlammuntersuchung, Verlag Chemie, Weinheim) wurden folgende Kationen- und Anionengehalte gemessen (mg/l Eluat):
As 0.014, Cd 0.40, Cr 0.1, Cu 0.05, Hg 0.001, Ni 1.33, Pb 0.22, Zn 1.13
$Cl^-$ 1456, $SO_4^{2-}$ 1094, $NO_3^-$ < 0.1, $NO_2^-$ < 0.1, $F^-$ < 0.1, $PO_4^{3-}$ < 0.1

Mittels Röntgenpulverdiffraktometrie wurden die Phasen Kalzit und Quarz nachgewiesen.

10 Gewichtsteile dieses Filterstaubs wurden zu 90 Gewichtsteilen einer Ton-Berge-Mischung hinzudosiert.

Die Ton-Berge-Mischung bestand aus ca. 35 Gew.-% Schieferton, 55 Gew.-% Mergelton und 10 Gew.-% Trockenbergen.

Sie enthielt mineralogisch in der Hauptsache Kaolinit als Tonmineral und Quarz.

pH-Wert: 7,9

Trockenverlust bei 110 °C: 18 %

Analyse (Gew.-%):
CaO 3.6, MgO 4.1, $Na_2O$ 0.3, $K_2O$ 3.9, $SiO_2$ 51.2, $Al_2O_3$ 18.7,
$Fe_2O_3$ 6.3, $MnO_2$ 0.1, $Cr_2O_3$ 0.02, Glühverlust 11.45

Kohlenstoff (aus den Bergen): 0,3

Nach intensiver Durchmischung und Einstellung der gewünschten Plastizität durch Wasserzugabe wurde die Masse durch eine Lochplatte, Durchmesser der Löcher 4 mm, gepreßt. Die dabei entstehenden Stränge wurden von einem rotierenden Metallabstreifer, der sich unmittelbar hinter der Lochplatte befand, abgelängt auf ca. 10 mm.

Die so erhaltenen Formlinge wurden 3 Stunden bei 160 °C getrocknet. Anschließend wurde bei einer Temperatur von 950 °C gebrannt, Brenndauer 3 Stunden, rasche Aufheizphase und schnelles Abkühlen.

Das Auslaugverhalten der gebrannten Mischung wurde nach DEV-S4 (Deutsche Einheitsverfahren zur Wasser-, Abwasser- und Schlammuntersuchung, Verlag Chemie, Weinheim) untersucht. Die Inhaltsstoffe aus dem Elutionsversuch sind nachfolgend im Vergleich zu den Richtwerten der Deponieklasse 2 des Richtlinienentwurfes des Landes Nordrhein-Westfalen, Stand Juni 1987, aufgeführt.

| Parameter | Eluat | Richtwert |
|---|---|---|
| 1. allgemeine Kennwerte | | |
| pH | 8.5 | 5.5 - 12 |
| Leitfähigkeit (mS/m) | 101 | 300 |
| Chemischer Sauerstoff-bedarf (mg/l) | < 15 | 50 |

Fortsetzung Tabelle:

| Parameter | Eluat | Richtwert |
|---|---|---|
| 2. Schwermetalle (mg/l) | | |
| As | 0.078 | 0.1 |
| Cd | < 0.05 | 0.05 |
| Cr | 0.13 | 1 |
| Cu | < 0.05 | 1 |
| Hg | < 0.001 | 0.005 |
| Ni | < 0.1 | 0.5 |
| Pb | < 0.1 | 0.5 |
| Zn | < 0.05 | 5 |
| 3. Anionen (mg/l) | | |
| $Cl^-$ | 6.0 | durch Leitfähigkeit begrenzt |
| $SO_4^{2-}$ | 360 | durch Leitfähigkeit begrenzt |
| $NO_3^-$ | < 0.1 | 100 |
| $NO_2^-$ | < 0.1 | 1 |
| $F^-$ | < 0.1 | 5 |
| $PO_4^{3-}$ | < 2 | 10 |

Das gebrannte Erzeugnis ist vorgesehen als Zuschlag beispielsweise mit einer durch einen Gehalt an freiem Kalk aktivierbaren, latent-hydraulischen Wirbelschichtasche als Bindemittel zu einem Bergbaumörtel zusammengestellt zu werden. Hierzu werden 90 Gewichtsteile des gebrannten Erzeugnisses mit 10 Gewichtsteilen des Bindemittels vermischt.

Der Mörtel weist dann bei einem Wasser/Feststoff-Verhältnis von 0.3 nach 28tägiger Aushärtung eine Druckfestigkeit von 12.4 N/mm² auf.

Je nach Art und Anteil des Bindemittels kann der Bergbaumörtel als Baustoff für Streckenbegleitdämme, als Konsolidierungsbaustoff oder zum Hinterfüllen und Verfüllen eingesetzt werden.

Mit der zusätzlichen Einbindung des keramischen Zuschlags durch ein hydraulisches Bindemittel kommt es zu einer vollständigen Immobilisierung der wesentlichen umweltrelevanten Schadstoffe.

**Patentansprüche**

1. Verfahren zur Wiederverwertung von staub- oder schlammförmig anfallendem, insbesondere schwermetallhaltigem, Sonderabfall durch Einbinden in ein möglichst sulfat- und sulfitarmes tonkeramisches Erzeugnis, dadurch gekennzeichnet,

daß als tonmineralhaltiger Rohstoff Abraum-Ton oder Bergematerial aus dem Kohlebergbau, der bzw. das zu mindestens 80 % auf eine Korngröße unter 0,5 mm gemahlen worden ist, verwendet wird in einem Feststoff-Anteil im Masseversatz von 20 bis 90 Gew. %, gerechnet unter Abzug des ggf. vorhandenen Kohlegehaltes, und damit ein Zuschlag zu einem Versatzbaustoff für den Bergbau in einer Korngröße von mindestens 95 % unter 32 mm hergestellt wird.

2. Verfahren nach Anspruch 1,
   dadurch gekennzeichnet,
   daß als das Bergematerial mindestens teilweise Waschberge oder Flotationsschlamm verwendet werden bzw. wird.

3. Verfahren nach Anspruch 1 oder 2,
   dadurch gekennzeichnet,
   daß ein 10 bis 30 % Kohle enthaltendes Bergematerial verwendet wird oder der Kohlegehalt durch gemahlene Feinkohle oder Ballastkohle auf 10 bis 30 % erhöht wird.

4. Verfahren nach einem der Ansprüche 1 bis 3,
   dadurch gekennzeichnet,
   daß als Bergematerial ein Anteil Berge-Kohle-Schlamm aus Absetzweihern verwendet wird.

5. Verfahren nach einem der Ansprüche 1 bis 4,
   dadurch gekennzeichnet,
   daß ein Anteil an weiterem keramisierungsfähigem Abfall, insbesondere $SiO_2$-haltigem Abfall, insbesondere Ölsand und/oder Kieselgur-Filtermasse, hinzugefügt wird.

6. Verfahren nach einem der Ansprüche 1 bis 5,
   dadurch gekennzeichnet,
   daß
   Schlamm aus einem Fällungs- oder Neutralisierungsprozeß der Galvanik, der Oberflächenveredelung oder der Wasseraufbereitung oder aus einer Beizerei,
   Abwasserschlamm aus einem Emaillierungs- oder Keramikbetrieb,
   Filterstaub aus einer Müllverbrennungsanlage,
   Kupolofenfilterstaub,
   Filterstaub und/oder Aschereststoff aus einem Kohlekraftwerk, Rückstände aus einer Trocken- bzw. Naßentstaubung aus einem Stahlwerk
   keramisch eingebunden wird.

7. Verfahren nach einem der Ansprüche 1 bis 6,
   dadurch gekennzeichnet,
   daß das Erzeugnis durch Strangpressen in runde Stangen von 2 bis 15 mm Durchmesser geformt und in Stücke gebrochen ist und vorzugsweise in einem Drehrohrofen oder Rostbandofen gebrannt ist.

8. Verfahren nach einem der Ansprüche 1 bis 6,
   dadurch gekennzeichnet,
   daß das Erzeugnis durch Pelletisierung in Pellets geformt und vorzugsweise in einem Drehrohrofen oder Rostbandofen gebrannt ist.

9. Verfahren nach einem der Ansprüche 1 bis 6,
   dadurch gekennzeichnet,
   daß das Erzeugnis in kompakte Stücke geformt, vorzugsweise in einem Tunnelofen oder Rostbandofen gebrannt und nach dem Brennen unter 32 mm gebrochen ist.

10. Verfahren nach einem der Ansprüche 1 bis 6,
    dadurch gekennzeichnet,
    daß das Erzeugnis in kompakte Stücke geformt und vor dem Brennen in Stücke gebrochen ist und vorzugsweise in einem Tunnelofen oder Rostbandofen gebrannt ist.

**Claims**

1. Method for the recycling of special waste occurring in the form of dust or sludge, in particular waste containing heavy metals, by bonding it into a clay ceramic product with the lowest possible content of sulphate and sulphite,
characterized in that
overburden clay or minestone material from the coal mining industry, at least 80% of which has been pulverized to a grain size smaller than 0.5 mm, is used as the clay mineral containing raw material with a proportion of solids of 20 to 90 % by weight in the body composition, calculated by deducting the coal content, if any, and an aggregate for a filling material for the mining industry is produced with a grain size of at least 95% below 32 mm.

2. Method according to Claim 1,
characterized in that
coal preparation tailings or froth flotation sludge are used at least in part as the minestone material.

3. Method according to Claim 1 or 2,
characterized in that
a minestone material containig 10 to 30% of coal is used, or the coal content is increased to 10 to 30% by the addition of pulverized small coal or low-grade coal.

4. Method according to one of the Claims 1 to 3,
characterized in that
a proportion of minestone-coal-sludge from settling ponds is used as the minestone material.

5. Method according to one of the Claims 1 to 4,
characterized in that
a proportion of further waste capable of ceramization, in particular $SiO_2$ containing waste, in particular oil sand and/or diatomite filter mass, is added.

6. Method according to one of the Claims 1 to 5,
characterized in that
sludge from a precipitation or neutralization process in the electroplating, surface finishing or water purification sectors or from a pickling plant,
effluent sludge from an enamelling or ceramic works,
filter dust from a refuse incineration plant,
cupola furnace filter dust,
filter dust and/or ash residue from a coal-fired power station, residues from a dry or wet dust removal system in a steelworks
are bonded ceramically.

7. Method according to one of the Claims 1 to 6,
characterized in that
the product is formed by extrusion into round bars of 2 to 15 mm diameter and is broken into pieces and is preferably heated in a cylindrical rotary furnace or a conveyor furnace.

8. Method according to one of the Claims 1 to 6,
characterized in that
the product is formed into pellets by pelletization and is preferably heated in a cylindrical rotary furnace or a conveyor furnace.

9. Method according to one of the Claims 1 to 6,
characterized in that
the product is formed into compact pieces, is preferably heated in a tunnel furnace or a cylindrical rotary furnace, and is broken into pieces of less than 32 mm after heating.

10. Method according to one of the Claims 1 to 6,
characterized in that
the product is formed into compact pieces and is broken into smaller pieces and is preferably heated in a tunnel furnace or a conveyor furnace.

## Revendications

1. Procédé pour le recyclage de déchets spéciaux poussiéreux ou boueux, notamment de déchets spéciaux contenant des métaux lourds, par incorporation à un produit céramique argileux aussi pauvre que possible en sulfates et en sulfites, caractérisé en ce que la matière première argileuse utilisée est constituée par de l'argile provenant de déblais ou de matériaux de terre provenant de l'exploitation dès mines de charbon qui sont broyés de manière à avoir, dans une proportion de 80% au moins, une granulométrie inférieure à 0,5 mm et qui entrent dans la composition de la masse dans une proportion de 20 à 90% en poids de la masse solide calculée après déduction de la teneur éventuelle de charbon, de manière à obtenir un matériau d'appoint destiné à être associé à un matériau de remplissage pour l'exploitation des mines et ayant, dans une proportion de 95% au moins, une granulométrie inférieure à 32 mm.

2. Procédé selon la revendication 1, caractérisé en ce que les matériaux de terre utilisés sont constitués au moins en partie par des terres de lavoir ou par une boue de flottation.

3. Procédé selon l'une des revendication 1 ou 2, caractérisé en ce qu'il comporte l'utilisation de matériaux de terre contenant de 10 à 30% de charbon ou que la teneur en charbon est portée à une valeur de 10 à 30% par addition des fines broyées ou de produits secondaire broyé.

4. Procédé selon une des revendications 1 à 3, caractérisé en ce que les matériaux de terre sont constitués en par une boue de terres et de charbon provenant de bassins de décantation.

5. Procédé selon une des revendication 1 à 4, caractérisé en ce qu'on ajoute une certaine quantité d'autres déchets pouvant être transformé en une matière céramique, notamment des déchets contenant du $SiO_2$, notamment du sable bitumineux et/ou une masse de filtrage du Kieselguhr.

6. Procédé selon une des revendications 1 à 5, caractérisé en ce que de la boue provenant d'une opération de précipitation ou de neutralisation galvanique, d'un traitement de surface ou d'une opération de traitement des eaux ou d'une installation de mordançage, de la boue provenant d'une installation d'émaillage ou de production de matières céramiques, de la poussière de filtre provenant d'une installation d'incinération des ordures, de la poussière provenant des filtres de cubilots, de la poussière de filtre et/ou des résidus de cendres provenant d'une centrale thermique au charbon ou des résidus provenant d'une installation de dépoussièrage par voie sèche ou humide dans une aciérie sont incorporés au produit céramique fabriqué.

7. Procédé selon une des revendications 1 à 6, caractérisé en ce que le produit est obtenu par filage à la presse sous la forme de barres rondes de 2 à 15 mm de diamètre et cassé en morceaux et, de préférence, soumis à une cuisson dans un four tubulaire tournant ou dans un four de grillage à bande.

8. Procédé selon une des revendications 1 à 6, caractérisé en ce que le produit est obtenu par bouletage sous la forme de boulettes et, de préférence, soumis à une cuisson dans un four tubulaire tournant ou dans un four de grillage à bande.

9. Procédé selon une des revendications 1 à 6, caractérisé en ce que le produit est moulé en morceaux compacts et soumis de préférence à une cuisson dans un four tunnel ou un four de grillage à bande et concassé, après sa cuisson, jusqu'à une granulométrie inférieure à 32 mm.

10. Procédé selon une des revendications 1 à 6, caractérisé en ce que le produit est moulé en morceaux compacts et, avant sa cuisson, concassé en morceaux et soumis de préférence à une cuisson dans un four tunnel ou un four de grillage à bande.